# DEMANDE DE BREVET EUROPEEN

(11) **EP 4 175 016 A1**
(43) Date de publication de la demande: **03.05.2023**
(21) Numéro de dépôt: 22203030.6
(22) Date de dépôt: 21.10.2022
(51) Int. Cl.: H01M 10/54, H01M 6/52, H01M 10/0525, H01M 4/131, H01M 4/133

(54) **PROCÉDÉ D'INERTAGE D'ACCUMULATEURS ÉLECTROCHIMIQUES, NOTAMMENT MÉTAL-ION, PAR IMMERSION INITIALE DANS UNE SOLUTION DE CHLORURE DE CALCIUM À BASSE TEMPÉRATURE, PUIS COURT-CIRCUITAGE ÉLECTRIQUE EN VUE DE LEUR BROYAGE**

(30) Priorité: 26.10.2021 FR 2111377
(71) Demandeur: Commissariat à l'énergie atomique et aux énergies alternatives, 75015 Paris (FR)
(72) Inventeur: VINCENT, Rémi, 38054 GRENOBLE CEDEX 09 (FR); BACHIR ELEZAAR, Kamel, 38054 GRENOBLE CEDEX 09 (FR); LY, Clémence, 38054 GRENOBLE CEDEX 09 (FR)
(74) Mandataire: Cabinet Nony

(57) **Abrégé**

Procédé d'inertage d'accumulateurs électrochimiques, notamment métal-ion, par immersion initiale dans une solution de chlorure de calcium à basse température, puis court-circuitage électrique en vue de leur broyage.

L'invention consiste essentiellement à générer un court-circuit d'accumulateurs électrochimiques plongés dans une solution aqueuse de CaCl₂ dont la basse température à l'état liquide, typiquement -50°C, garantit l'absorption thermique de l'échauffement des accumulateurs et donc évite à coup sûr leur emballement thermique, et ce au préalable et indépendamment du broyage des accumulateurs.

## Description

### Domaine technique

La présente invention concerne le domaine des accumulateurs électrochimiques, et plus particulièrement des accumulateurs métal-ion ou autres chimies (plomb...).

L'invention vise en premier lieu à garantir la décharge électrique d'accumulateurs par court-circuit avant leur recyclage, et sans générer un emballement thermique desdits accumulateurs.

Bien que décrite en référence à un accumulateur Lithium-ion, l'invention s'applique à tout accumulateur électrochimique métal-ion, c'est-à-dire également Sodium-ion, Magnésium-ion, Aluminium-ion, voire d'autres chimies (Plomb..)...

### Technique antérieure

Avec le développement très important des véhicules électriques grand public utilisant des batteries lithium-ion, la production de celles-ci a augmenté de manière considérable.

Parmi les stratégies de fin de vie des batteries lithium-ion, le recyclage des batteries usagées est une solution pour réaliser le développement durable et la pollution minimale de l'environnement.

L'inertage des batteries lithium-ion est une étape essentielle préalable au processus de recyclage en tant que tel pour assurer la sécurité des personnes et de l'environnement lors de leur recyclage. En effet, une des étapes du recyclage consiste à réaliser le broyage des accumulateurs.

Lors de ce broyage, si un accumulateur n'est pas complètement déchargé, il y a un risque de court-circuit qui provoque l'échauffement de l'accumulateur et qui peut amener à son emballement thermique. Dans ce cas, il y a un risque physique dû aux éventuels explosions et départ de feu, mais également un risque chimique dû aux fumées toxiques qui peuvent être produites lors de l'emballement. De même, dans le cas où un transport doit être assuré d'accumulateurs en fin de vie destinés au recyclage, le fait de transporter des accumulateurs préalablement inertés contribue à la sécurité.

Un process qui permet une décharge rapide et sécurisée d'une grande quantité d'accumulateurs afin qu'ils puissent être recyclés par la suite consiste à plonger les accumulateurs, séparés au préalable les uns des autres, dans une cuve contenant une solution de NaCl de concentration donnée.

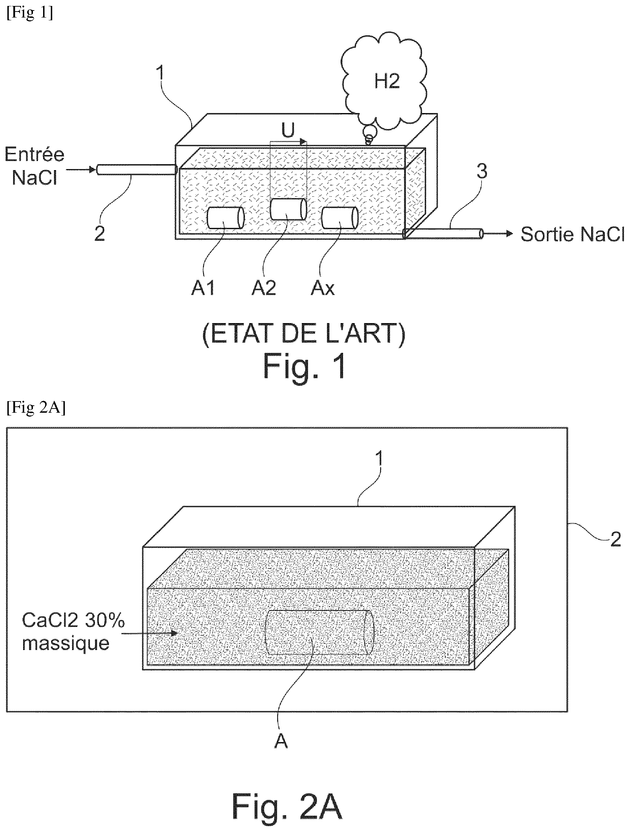

La figure 1 représente schématiquement une installation mettant en œuvre un tel process : les accumulateurs A1, A2, ..Ax dont l'électrochimie est encore active sont immergés dans une cuve 1 contenant une solution de NaCl introduite par un conduit d'alimentation 2. La solution de NaCl peut être extraite par un conduit de sortie 3.

La tension U entre les bornes de sortie d'un accumulateur A1, A2,..Ax étant supérieure à 1,23V, l'hydrolyse de l'eau salée peut se faire selon les équations de réaction :
- à la borne négative : H₂O = 1/2O₂+2H⁺+2e⁻
- à la borne positive : 2H⁺+2e⁻ = H₂.

En conséquence, chaque accumulateur à l'électrochimie active se décharge électriquement progressivement. Le débit d'hydrogène qui peut se dégager par l'hydrolyse peut être important. La quantité de dihydrogène générée par l'hydrolyse est d'autant plus élevée que le nombre d'accumulateurs est grand.

A titre d'exemple, pour une immersion d'un nombre égal à 8000 accumulateurs de format 18650 dans une solution de NaCl concentrée à 5% massique, il a pu être mesuré à 103,7 1/s. Cette quantité de dihydrogène dégagée augmente par-là les risques d'ATmosphères Explosives (ATEX). Les équipements d'aération entourant la solution de décharge (NaCl) doivent pouvoir gérer le dégagement d'hydrogène tout en restant dans des limites acceptables. Ceci influe sur leur dimensionnement, et également sur la quantité d'accumulateurs pouvant être déchargés simultanément, qui est fonction de leur activité électrochimique résiduelle.

On trouve dans la littérature, des publications traitant de techniques d'inertage d'accumulateurs par le froid.

Ainsi, le brevet US7,833,646 B2 divulgue une solution selon laquelle des batteries au lithium sont broyées sous un flux de CO₂ gazeux, refroidi de façon continue. La température du CO₂ gazeux n'est pas mentionnée. Cette solution présente plusieurs inconvénients : tout d'abord, elle impose un inertage sous atmosphère, ce qui implique des installations conséquentes. Également, le refroidissement par flux de gaz est à priori moins efficace qu'un refroidissement par immersion dans un liquide.

Le brevet US5888463A propose de plonger des batteries au lithium dans de l'azote liquide, qui est à une température de l'ordre de -196°C, puis de les broyer. Cette technique permet de broyer les batteries en garantissant que celles-ci ne partent pas en emballement thermique. En revanche, l'utilisation de l'azote liquide est coûteuse et exige de descendre à des températures extrêmement basses (-196°C). Les appareils, en particulier de broyage, doivent donc être spécifiquement conçus pour pouvoir résister à ces températures, ce qui ajoute un coût supplémentaire au procédé.

Il existe par conséquent un besoin de proposer une solution d'inertage d'accumulateurs électrochimiques, notamment métal-ion, qui soit fiable, i.e. qui permette un broyage des accumulateurs sans risque de départ de feu ou d'explosion, et qui puisse être réalisée à moindre coût par rapport aux solutions de l'état de l'art.

Le but de l'invention est de répondre au moins en partie à ce besoin.

### Exposé de l'invention

Pour ce faire, l'invention concerne, sous l'un de ses aspects, un procédé d'inertage d'accumulateurs électrochimiques (A), notamment métal-ion, comprenant les étapes suivantes:
0/ sélection d'un type de sel ou mélange de sels, de sa(leur) concentration massique dans une solution aqueuse et de la température de refroidissement de la solution aqueuse qui permette à l'(aux) accumulateur(s) de rester à une température inférieure ou égale à la température dite « d'emballement thermique » T2 ; la sélection étant en outre réalisée pour assurer un état liquide à la solution aqueuse tout au long du refroidissement ;
i/ fourniture d'une solution aqueuse de sel ou mélange de sels sélectionné(s) selon l'étape 0/;
ii/ refroidissement de la solution aqueuse de sel ou mélange de sels à la température déterminée selon l'étape 0/ ;
iii/ immersion du ou des accumulateurs dans la solution aqueuse de sel ou mélange de sels refroidie ;
iv/ mise en court-circuit du ou des accumulateurs, afin de provoquer sa(leur) décharge électrique.

Selon un mode de réalisation avantageux, l'étape i/ consiste en la fourniture d'une solution aqueuse de chlorure de calcium (CaCl2). Selon ce mode, la concentration est avantageusement comprise entre 0 % et 30% massique en CaCl2.

De préférence, la température déterminée à l'étape 0/ est supérieure ou égale à -50°C.

De préférence encore, l'étape iv/ est réalisée par perçage ou écrasement de l'emballage du ou des accumulateurs.

De préférence encore, l'étape iv/ est réalisée pendant une durée (t) comprise entre 0,5 et 7h, de préférence inférieure à 4h.

L'invention a également pour objet un procédé d'inertage d'une pluralité d'accumulateurs électrochimiques tel que décrit précédemment, la pluralité d'accumulateurs étant assemblée au sein d'un module ou d'un pack-batterie pendant les étapes iii/ et iv/ et le cas échéant, désassemblée à l'issue de l'étape iv/.

L'invention a encore pour objet un accumulateur déchargé électriquement selon le procédé décrit précédemment.

Chaque accumulateur peut être un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

L'invention concerne également un procédé de recyclage d'accumulateurs électrochimiques, comprenant une étape de broyage d'accumulateurs issus du procédé décrit précédemment.

Avantageusement, l'étape de broyage est réalisée ultérieurement à l'étape v/ et le cas échéant dans une autre installation que celle mettant en œuvre les étapes i/ à v/.

Ainsi, l'invention consiste essentiellement à générer un court-circuit d'accumulateurs électrochimiques plongés dans une solution aqueuse de CaCl₂ dont la basse température à l'état liquide, typiquement -50°C, garantit l'absorption thermique de l'échauffement des accumulateurs et donc évite à coup sûr leur emballement thermique, et ce au préalable et indépendamment du broyage des accumulateurs.

Pour le phénomène d'emballement thermique, on se reportera à la publication [1] et au protocole décrit dans cette publication. La température dite « d'emballement thermique » est notée T2 dans cette publication.

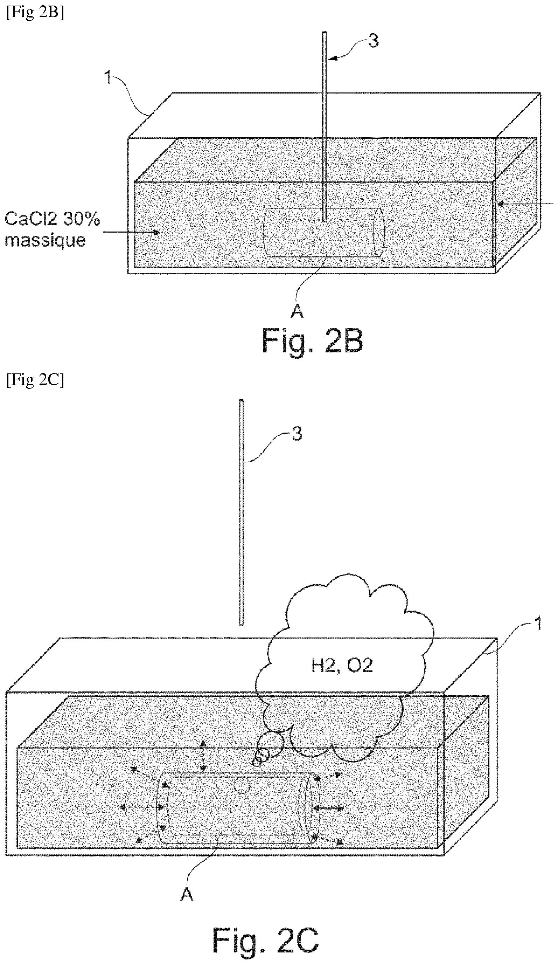

La température T2, typiquement 150°C, dans la figure 2 de la publication, est la température à partir de laquelle l'accumulateur s'échauffe à une vitesse d'échauffement typique de 10°C/min en conditions adiabatiques, ce qui conduit à la fusion du séparateur dans le faisceau électrochimique de l'accumulateur, à un court-circuit et donc à l'effondrement de la tension.

Par « emballement thermique », on peut ainsi comprendre ici et dans le cadre de l'invention, un rapport entre la valeur de la dérivée de la température d'échauffement et celle du temps au moins égal à 0,02°C par min.

L'invention apporte de nombreux avantages parmi lesquels on peut citer :
- la garantie d'un broyage d'accumulateurs pour leur recyclage, voire de son transport préalable au broyage, en toute sécurité ;
- la mise en œuvre d'un process à basse température, typiquement à -50°C, de moindre coût en lieu et place d'un procédé de broyage cryogénique sous azote liquide (-196°C) comme selon l'état de l'art, très coûteux en termes d'investissement et de fonctionnement ;
- la possibilité d'inertage simultané de plusieurs accumulateurs d'un même module ou pack-batterie, qui simplifie et sécurise le démontage hors tension du module ou du pack-batterie avant l'étape de broyage et permet ainsi de ne pas introduire dans un broyeur le module ou pack-batterie dans son intégralité mais au contraire, par groupe d'accumulateurs séparés voire accumulateur par accumulateur ;
- la possibilité d'un recyclage complet d'accumulateurs sur deux installations industrielles séparées, l'une dédiée à la réalisation du court-circuit lors de l'immersion des accumulateurs dans la solution aqueuse refroidie à basse température et l'autre dédiée uniquement au broyage des accumulateurs mis en court-circuit et dont l'intégrité physique n'est pas impactée au préalable (écrasement).

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] la figure 1 est une vue schématique d'une installation selon l'état de l'art, d'inertage d'accumulateurs lithium-ion par immersion dans une solution de NaCl.
[Fig 2A] la figure 2A est une vue schématique d'une installation selon l'invention d'inertage d'un accumulateur lithium-ion mettant en œuvre une étape par immersion dans une solution aqueuse de chlorure de calcium (CaCl₂) refroidie dans une enceinte de refroidissement.
[Fig 2B] la figure 2B est une vue schématique montrant une étape consécutive dans laquelle l'accumulateur immergé dans la solution refroidie est percé par un clou.
[Fig 2C] la figure 2C est une vue schématique de l'étape résultante du perçage de l'accumulateur, selon laquelle la solution et l'accumulateur sont en court-circuit et l'eau de la solution subit une électrolyse.
[Fig 3] la figure 3 est une vue schématique illustrant une variante de mise en court-circuit par écrasement de l'accumulateur.
[Fig 4] la figure 4 illustre sous forme de courbes l'évolution temporelle des températures d'une solution aqueuse de CaCl₂ et d'un accumulateur Li-ion qui y est immergé, au cours d'essais selon le procédé de l'invention.
[Fig 5] la figure 5 illustre sous forme de courbes l'évolution de la tension de l'accumulateur immergé au cours des essais selon le procédé de l'invention.

### Description détaillée

La figure 1 est relative à une installation mettant en œuvre un inertage direct d'une pluralité d'accumulateurs Li-ion selon l'état de l'art. Cette figure 1 a déjà été commentée en préambule et ne l'est donc pas plus ci-après.

Par souci de clarté, les mêmes références désignant les mêmes éléments selon l'état de l'art et selon l'invention sont utilisées pour toutes les figures 1 à 2B.

On décrit maintenant un procédé d'inertage d'au moins un accumulateur Li-ion selon l'invention.

Etape 0/ : Sélection d'un type de sel ou mélange de sels, de sa(leur) concentration massique dans une solution aqueuse et de la température de la solution aqueuse assurant :
- un refroidissement suffisant de la puissance thermique dégagée par un/des accumulateurs en court-circuit pour empêcher le départ en emballement thermique du(des) accumulateurs, c'est-à-dire une température qui permette au travers de l'augmentation de la résistance interne du(des) accumulateur(s) de limiter le courant et par conséquence les dégagements de chaleur et rester ainsi à une température inférieure à la température T2 de début d'emballement thermique;
- un état liquide à la solution aqueuse, tout au long du refroidissement, en particulier une température supérieure ou égale à la température de passage de l'état solide à l'état liquide pour la solution.

La température de refroidissement est déterminée par les caractéristiques intrinsèques du(des) accumulateurs A, à savoir la résistance interne de la ou des cellules électrochimiques et de l'électrolyte de la ou des cellules constituant le(s) accumulateurs. En effet, la puissance thermique générée par le court-circuit dépend de la résistance interne de la ou des cellules électrochimiques constituant l'(les) accumulateur(s), selon l'équation : P=U²/Rᵢₙₜ où U est la tension de la (des) cellule(s) et Rᵢₙₜ la résistance interne de la (des) cellule(s). La résistance interne, quant à elle, dépend de la température de la cellule, d'où l'intérêt de la refroidir fortement. Ainsi, en connaissant la résistance interne de la cellule en fonction de la température, qui peut être déterminée expérimentalement, on peut déduire la puissance thermique générée par la décharge de la batterie à une température donnée, et donc s'assurer que la cellule sera suffisamment refroidie par son environnement pour ne pas dégager trop de puissance qui et ultimement risquer de partir en emballement thermique.

L'énergie dégagée par la décharge d'un accumulateur, régie par l'équation: E_{décharge}=U²/R_int ^{∗}t_{décharge} où t_{décharge} est le temps de la décharge, doit être égale à la quantité de chaleur échangée définie par l'équation: Q=m_solution^{∗}[Cp]_solution^{∗}(T_cellule-T_solution) avec U la tension de cellule, Rᵢₙₜ la résistance interne de la cellule, m la masse de la solution de sel(s) et Cp la capacité thermique massique de la solution de sel(s).

D'autres influences peuvent également être issues du système de refroidissement de la solution elle-même et la qualité des échanges thermiques entre l'accumulateur et le milieu liquide. Elles peuvent être améliorées par divers moyens comme des agitateurs mécaniques, des flux de liquide, etc. La prise en compte de ces facteurs environnementaux, et une marge appropriée, permettront à l'homme du métier de déterminer une température maximale de la solution aqueuse sélectionnée permettant d'empêcher l'emballement thermique de l'accumulateur par le double effet de la limitation de la chaleur produite du fait d'une résistance interne élevée et de l'évacuation par refroidissement de la chaleur produite. Par soucis de sécurité, il peut être choisi de se limiter à l'effet de refroidissement passif, sans mettre en oeuvre des moyens supplémentaires de refroidissement, c'est-à-dire facilitation des échanges ou refroidissement actif de la solution. Une température inférieure à cette température maximale sera choisie pour la solution, tout en s'assurant également d'un état liquide, et non solide, de celle-ci a fortiori tout au long du refroidissement.

Si aucune température de refroidissement de la solution donnée ne permet un état liquide, et non solide, d'autres concentrations massiques doivent être considérées, ainsi que d'autres sels ou mélanges de sels.

Différents sels en mélanges aqueux sont utilisables dès lors que le mélange présente un eutectique à la température voulue. Par exemple, le sel NaCl 23,3% massique permettant d'atteindre -21°C. Ceci est aussi possible avec d'autres sels : KCl, MgCl₂ ou mélange de sels.

Une solution aqueuse de CaCl₂ dont la concentration est comprise entre 0 % et 30% massique en CaCl2 permet d'atteindre des températures entre 0°C et -50°C à l'état liquide.

Typiquement, pour la solution aqueuse de chlorure de calcium CaCl2 à une concentration massique de 30%, la température de refroidissement en phase liquide la plus basse est de l'ordre de -50°C. En effet, avec cette concentration massique, la solution est liquide jusqu'à -50°C, température qui permet d'avoir un coefficient d'échange thermique passif suffisant avec le ou les accumulateurs pour absorber leur échauffement lors de leur décharge électrique et en tout état de cause éviter leur emballement thermique. C'est le choix effectué ici.

Etape i/ : on fournit une solution aqueuse de sel ou mélange de sels tels que définis précédemment, ici de chlorure de calcium à une concentration massique de 30%.

Etape ii/ : A cette concentration, on refroidit la solution à la température définie précédemment.

Etapes iii/ : on immerge dans une cuve 1 remplie de la solution aqueuse chlorure de calcium CaCl₂ à 30% de concentration massique, au moins un accumulateur Li-ion A, qui est placée dans une enceinte 2 refroidie et maintenue à -50°C (figure 2A).

Etape iv/ : La cuve 1 contenant l'accumulateur A et la solution aqueuse refroidie à -50°C est ensuite sortie de l'enceinte 2 et placée à l'air ambiant sous une hotte aspirante non représentée.

L'emballage de l'accumulateur A est alors percé par un clou 3, afin de générer un court-circuit (figure 2B). On précise ici qu'on peut utiliser tout autre moyen de perçage qu'un clou, adapté pour percer l'emballage de l'accumulateur.

Le clou 3 est ensuite retiré (figure 2C), ce qui permet à la solution aqueuse de CaCl2 de pénétrer au sein de l'accumulateur. A la température de -50°C, la résistance interne de l'accumulateur A est telle que le courant généré par le court-circuit est très faible.

Au fur et à mesure que le bain contenant la solution aqueuse avec l'accumulateur A se réchauffe par court-circuit, l'accumulateur A se décharge également par court-circuit.

L'accumulateur A se décharge en outre par électrolyse de l'eau de la solution à ses bornes de sortie puisque la solution aqueuse de CaCl₂ est conductrice et que la tension entre les bornes est supérieure à la tension de 1,23V selon les réactions ci-dessous.
- à la borne négative, [Equ 1]: H₂O = ½ O₂+2H⁺+2e⁻
- à la borne positive, [Equ 2]: 2H⁺+2e⁻ = H₂

L'hydrogène et l'oxygène dégagés pendant ces réactions sont aspirés par la hotte.

L'échauffement lié au court-circuit est absorbé thermiquement par la solution refroidie jusqu'à la décharge électrique totale de l'accumulateur A.

L'accumulateur A peut être ainsi broyé pour réaliser son recyclage sans aucun risque de départ de feu ni d'explosion.

Pour la génération du court-circuit, en lieu et place d'un perçage de l'accumulateur A par un clou, on peut procéder à l'écrasement de l'accumulateur A. Tout comme dans le cas du court-circuit par le perçage par le clou, le contrôle de la température de la solution aqueuse de chlorure de calcium assure la sécurité lors de l'écrasement de l'accumulateur.

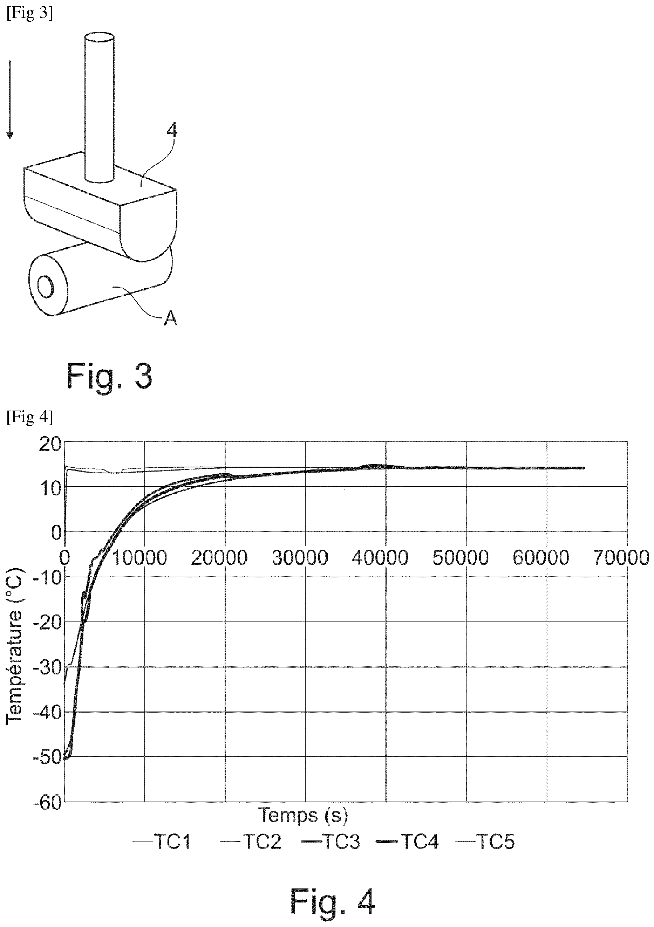

Une solution d'écrasement d'un accumulateur de géométrie cylindrique A est montrée en figure 3 : une barre de section semi-circulaire 4 est déplacée pour venir concasser l'emballage de l'accumulateur A. L'avantage d'une solution d'écrasement est que cela peut éviter à l'électrolyte liquide contenu dans l'accumulateur A de s'écouler à l'extérieur de son emballage et donc permet à la fois de ne pas contaminer le bain et de garder l'intégrité physique de l'accumulateur. En corollaire, conserver l'intégrité physique des accumulateurs A facilitent leur transport et leur stockage, avant leur broyage pour recyclage. On peut ainsi procéder à l'étape de broyage dans un autre lieu que l'immersion avec court-circuit, en toute sécurité.

Les inventeurs ont mené un essai, afin de vérifier la faisabilité du procédé d'inertage selon l'invention.

Pour ce faire, un accumulateur Li-ion de type 18650, chargé à 3Ah, a été utilisé.

Sa borne positive a été isolée électriquement par une résine, afin de simuler un accumulateur dont le dispositif d'interruption du courant (CID pour « current interruption device ») est ouvert. On rappelle ici qu'un dispositif CID, interne à l'accumulateur, interrompt le courant électrique si la pression du gaz en son sein dépasse des limites spécifiées.

Cet accumulateur 18650 a été plongé dans un bain contenant une solution aqueuse de CaCl₂ de concentration massique égale à 30% et refroidie à -50°C.

Puis l'accumulateur 18650 immergé dans cette solution aqueuse, a été percé par un clou en tungstène, qui a été retiré après 1min pour permettre à la solution de pénétrer dans l'accumulateur.

Des thermocouples ont été placés sur les bornes de l'accumulateur et dans la solution de CaCl₂ afin de suivre l'échauffement l'accumulateur.

L'évolution temporelle des températures de l'essai sont montrées en figure 4, sur laquelle TC1, TC2, TC3, TC4, TC5 désignent les températures mesurées par les thermocouples positionnés respectivement à l'air ambiant, dans la solution aqueuse de CaCl₂, à la borne de sortie positive de l'accumulateur, à la borne négative, et sur le clou en tungstène ayant réalisé le perçage.

Il ressort de ces courbes qu'aucun emballement thermique n'a été observé durant l'essai.

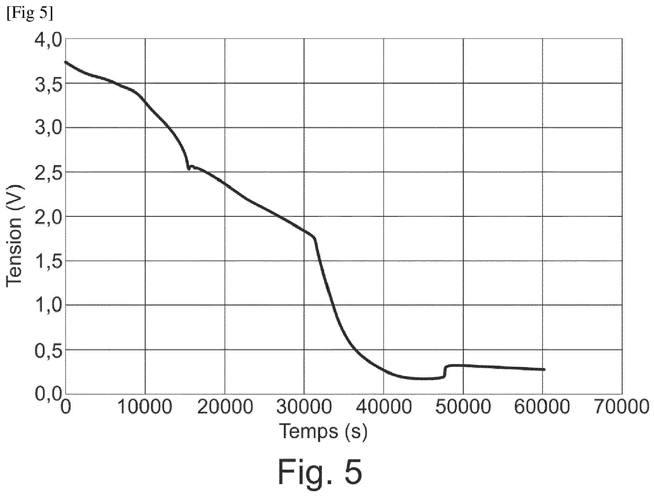

L'évolution temporelle de la tension de l'accumulateur a également été suivie, comme illustré à la figure 5. Il ressort de cette figure 5 que l'accumulateur a perdu la totalité de sa capacité électrique en environ 5h. Autrement dit, à la fin de cette durée, l'accumulateur 18650 est complètement déchargé électriquement.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

L'exemple illustré concerne un seul accumulateur : il va de soi que les mêmes étapes peuvent mises en œuvre pour une pluralité d'accumulateurs, le cas échéant encore assemblés en modules ou en pack-batterie lors de leur mise en court-circuit par perçage ou écrasement.

### Liste des références citées :

[1] Xuning Feng, et al. « Key Characteristics for Thermal Runaway of Li-ion Batteries » Energy Procedia, 158 (2019) 4684-4689.

## Revendications

1. Procédé d'inertage d'au moins un accumulateur électrochimique (A) comprenant les étapes suivantes:
0/ sélection d'un type de sel ou mélange de sels, de sa(leur) concentration massique dans une solution aqueuse et de la température de refroidissement de la solution aqueuse qui permette à l'(aux) accumulateur(s) de rester à une température inférieure ou égale à la température dite « d'emballement thermique » T2 ; la sélection étant en outre réalisée pour assurer un état liquide à la solution aqueuse tout au long du refroidissement ;
i/ fourniture d'une solution aqueuse de sel ou mélange de sels sélectionné(s) selon l'étape 0/;
ii/ refroidissement de la solution aqueuse de sel ou mélange de sels à la température déterminée selon l'étape 0/ ;
iii/ immersion du ou des accumulateurs dans la solution aqueuse de sel ou mélange de sels refroidie ;
iv/ mise en court-circuit du ou des accumulateurs, afin de provoquer sa(leur) décharge électrique.

2. Procédé selon la revendication 1, l'étape i/ consistant en la fourniture d'une solution aqueuse de chlorure de calcium (CaCl₂).

3. Procédé selon la revendication 2, la concentration étant comprise entre 0 % et 30% massique en CaCl₂.

4. Procédé selon l'une des revendications 1 à 3, la température déterminée à l'étape 0/ étant supérieure ou égale à -50°C.

5. Procédé selon l'une des revendications précédentes, l'étape iv/ étant réalisée par perçage ou écrasement de l'emballage du ou des accumulateurs.

6. Procédé selon l'une des revendications précédentes, l'étape iv/ étant réalisée pendant une durée (t) comprise entre 0,5 et 7h, de préférence inférieure à 4h.

7. Procédé d'inertage d'une pluralité d'accumulateurs électrochimiques selon l'une des revendications précédentes, la pluralité d'accumulateurs étant assemblée au sein d'un module ou d'un pack-batterie pendant les étapes iii/ et iv/ et le cas échéant, désassemblée à l'issue de l'étape iv/.

8. Accumulateur électrochimique déchargé électriquement selon le procédé selon l'une des revendications précédentes.

9. Accumulateur selon la revendication 8 constituant un accumulateur Li-ion dans lequel :
- le matériau d'électrode(s) négative(s) est choisi dans le groupe comportant le graphite, le lithium, l'oxyde de titanate Li₄TiO₅O_{12 ;}
- le matériau d'électrode(s) positive(s) est choisi dans le groupe comportant LiFePO₄, LiCoO₂, LiNi_{0.33}Mn_{0.33}Co_{0.33}O₂.

10. Procédé de recyclage d'accumulateurs électrochimiques, comprenant une étape de broyage d'accumulateurs selon l'une des revendications 8 à 9.

11. Procédé de recyclage selon la revendication 10, l'étape de broyage étant réalisée ultérieurement à l'étape iv/ et le cas échéant dans une autre installation que celle mettant en œuvre les étapes i/ à iv/.
